# EUROPÄISCHE PATENTANMELDUNG

(11) **EP 1 544 136 A1**
(43) Veröffentlichungstag der Anmeldung: **22.06.2005**
(21) Anmeldenummer: 04023866.9
(22) Anmeldetag: 07.10.2004
(51) Int. Cl.: B65G 47/61

(54) **Adapterhaken für Fördersysteme und Beladestation für einen Adapterhaken**

(30) Priorität: 18.12.2003 DE 10359859
(71) Anmelder: PEP Fördertechnik GmbH, 33609 Bielefeld (DE)
(72) Erfinder: Schneuing, Ralf, 33803 Steinhagen/Brockhagen (DE)
(74) Vertreter: Dantz, Jan Henning

(57) **Zusammenfassung**

Ein Adapterhaken für Fördersysteme, insbesondere für Bekleidungsstücke, umfasst eine obere Aufhängung (3), die an einer Schiene (25) oder einer Fördereinrichtung für den Transport von Gegenständen einhängbar ist, und eine untere Halteeinrichtung, mittels der ein oder mehrere Bügel (24) aufnehmbar sind. Erfindungsgemäß umfasst die untere Halteeinrichtung zur Aufnahme ein oder mehrerer Bügeln (24) einen Schwenkhebel, der über eine Verriegelungseinrichtung fixierbar ist. Mittels des Schwenkhebels ist vorzugsweise eine nach unten offene Aufnahme verschließbar, so dass mit dem Adapterhaken ein automatisches Beladen mit ein oder mehreren Bügeln (24) erfolgen kann. Ferner wird eine entsprechende Beladestation für einen Adapterhaken bereitgestellt.

## Beschreibung

Die vorliegende Erfindung betrifft einen Adapterhaken für Fördersysteme, insbesondere für Bekleidungsstücke, mit einer oberen Aufhängung, die an einer Schiene oder einer Fördereinrichtung für den Transport von Gegenständen einhängbar ist, und einer unteren Halteeinrichtung, mittels der ein oder mehrere Bügel aufnehmbar sind. Ferner betrifft die Erfindung eine Beladestation für einen solchen Adapterhaken.

Aus der DE 196 14 905 ist eine Fördertasche für einen Hängeförderer bekannt, bei dem zum Transport von Trägem eine Klinke vorgesehen ist, die an der Fördertasche gelagert ist und deren Achse in Transportrichtung hinter dem Auflagepunkt angeordnet ist. Dadurch kann aufgrund der Schwerkraft die Klinke in der geschlossenen Position gehalten werden. Nachteilig bei dieser Fördertasche ist, dass diese nicht für standardisierte Förderschienen einsetzbar ist und ein versehentliches Öffnen der Klinke nicht vollständig ausgeschlossen werden kann. Für ein Entladen und Öffnen der Klinke muss der an der Klinke eingehängte Gegenstand zunächst angehoben werden. Dadurch muss Hubarbeit geleistet werden und es ist schwierig, di undefinierten von der Gewichtskraft abhängigen Kräfte mechanisch in den Griff zu bekommen, was nur durch aufwendige Führungen erfolgen kann.

Aus der WO 96/29267 ist ein Adapterhaken für ein Fördersystem bekannt, bei dem ein oberer Haken für eine standardisierte Förderschiene einsetzbar ist. Ein zu transportierender Bügel wird mit einem oberen Haken hierfür in einen Schlitz von unten in den Adapterhaken eingefügt und dort über einen Rastmechanismus festgelegt. Dabei ist nachteilig, dass der Beladevorgang manuell erfolgt und die Rasteinrichtung speziell auf einen bestimmten Typ eines Bügels abgestimmt ist. Ferner ist es nicht möglich, mehrere Bügel gleichzeitig mit diesem Adapterhaken zu transportieren und es ist auch denkbar, dass das Beladen an dem Rastmechanismus nicht vollständig durchgeführt wird.

Schließlich ist aus der DE 195 00 612 ein weiterer Adapterhaken bekannt, der an einer standardisierten Förderschiene einhängbar ist. Im unteren Bereich weist der Adapterhaken zwei geschlitzte Schenkel auf, in die ein Bügel einhängbar ist. Auch bei diesem Adapterhaken besteht der Nachteil, dass nur bestimmte Bügel aufgenommen werden können und ein automatisches Be- und Entladen nur schlecht möglich ist. Ferner sind die Hebelverhältnisse nachteilig.

Es ist daher Aufgabe der vorliegenden Erfmdung einen Adapterhaken und eine Beladestation für einen Adapterhaken zu schaffen, wobei der Adapterhaken an standardisierten Förderschienen verwendbar sein soll und ein einfaches und sicheres Be- und Entladen für ein oder mehrere Bügel ermöglicht wird.

Diese Aufgabe wird mit einem Adapterhaken mit den Merkmalen des Anspruches 1 sowie einer Beladestation mit den Merkmalen des Anspruches 12 gelöst.

Erfindungsgemäß umfasst der Adapterhaken eine untere Halteeinrichtung zur Aufnahme ein oder mehrerer Bügel, an der ein Schwenkhebel angeordnet ist, der über eine Verriegelungseinrichtung fixierbar ist. Dadurch wird ein unbeabsichtigtes Verschwenken des Schwenkhebels vermieden, so dass die in der Aufnahme geladenen Bügel nicht versehentlich herabfallen können. Eine solche Verriegelungseinrichtung eignet sich auch besonders gut für ein automatisches Be- und Entladen, da eine mechanische Betätigung an bestimmten Stellen eines Fördersystems angeordnet sein kann. Wenn die Halteeinrichtung für ein oder mehrere Bügel ausgelegt ist, kann zudem der Adapterhaken universell eingesetzt werden und ist nicht auf einen bestimmten Typ eines Bügels beschränkt. Der Begriff "Adapterhaken" soll dabei auch Ausführungsformen umfassen, bei denen im oberen Bereich kein Haken sondern andere Befestigungsmittel vorgesehen sind, die an einem Förderband, einer Förderkette, einem Seil etc. festlegbar sind. Auch dann lässt sich der Adapterhaken für entsprechende Transportzwecke einsetzen.

Vorzugsweise ist mittels des Schwenkhebels eine nach unten offene Aufnahme verschließbar, in die ein oder mehrere Bügel einfügbar sind. Die nach unten offene Aufnahme kann besonders einfach mit Bügeln beladen werden. Wenn dabei eine Drehachse des Schwenkhebels im wesentlichen senkrecht zu einer Transportrichtung des Adapterhakens angeordnet ist, kann bei einer Bewegung des Adapterhakens in Transportrichtung der Schwenkhebel schon aufgrund der Anlage eines oder mehrerer Bügel verschwenkt werden, ohne dass ein gesonderter Antrieb oder andere Mittel vorgesehen sein müssen.

Gemäß einer bevorzugten Ausführungsform weist der Schwenkhebel einen unteren Schenkel zur Abstützung ein oder mehrerer Bügel auf. Der Schenkel bildet somit eine Auflagefläche für die Bügel. Dabei kann benachbart zu dem unteren Schenkel des Schwenkhebels eine in Transportrichtung vordere Anlagefläche ausgebildet sein, mittels der ein Bügel im wesentlichen senkrecht zur Transportrichtung ausrichtbar ist. Die Anlagefläche besitzt vorzugsweise eine größere Breite als der Schwenkhebel, so dass eine entsprechende Ausrichtung erfolgt.

Wenn der Schwenkhebel im wesentlichen C-förmig ausgebildet ist und eine Drehachse am oberen Schenkel angeordnet ist, wird der Schwenkhebel im beladenen Zustand schon aufgrund der Schwerkraft in eine Öffnungsrichtung gedrückt. Durch die Verriegelungseinrichtung wird eine solche Öffnungsbewegung jedoch verhindert, wobei für ein automatisches Entladen die Verriegelungseinrichtung nur gelöst werden muss und der Schwenkhebel kann durch die Schwerkraft in die geöffnete Position bewegt werden, so dass geladene Bügel herabfallen können.

Wenn der untere Schenkel des Schwenkhebels eine Auflagefläche für die Bügel ausbildet und in Transportrichtung gesehen geneigt abfallend ausgebildet ist, kann die Position eines beladenen Bügels genau bestimmt werden, da aufgrund der Schräge, die beispielsweise in einem Bereich zwischen 10° und 30° liegt, der Bügel an eine Vorderwand rutscht. An dieser Vorderwand findet dann auch eine Ausrichtung an der Anlagefläche statt.

Vorzugsweise weist die Aufnahme eine Rückwand auf und der Schwenkhebel ist durch einen Schlitz in die Rückwand durchführbar, so dass der Adapterhaken nach außen eine im wesentlichen geschlossene Gestaltung besitzt.

Für eine einfache Aufnahme von Bügeln ist der Schwenkhebel zwischen einer Vorderwand und einer Rückwand angeordnet und die Rückwand steht nach unten über die Vorderwand hervor. Dadurch kann für ein automatisches Beladen ein Bügel durch Bewegung des Adapterhakens in Transportrichtung die Vorderwand passieren, den Schwenkhebel verschieben und dann an der Rückwand mitgenommen werden.

Der Verriegelungsmechanismus lässt sich einfach durch einen Hebel ausbilden, der in einer ersten Position einen Anschlag für den Schwenkhebel ausbildet und in einer Position eine Bewegung des Schwenkhebels freigibt. Auch andere mechanische Mittel zum Verriegeln des Schwenkhebels sind allerdings denkbar.

Erfindungsgemäß wird auch eine Beladestation für einen Adapterhaken bereitgestellt, die eine Förderschiene für den Adapterhaken und eine darunter angeordnete Beladeschiene zum Zuführen von Bügeln aufweist, wobei eine Betätigungseinrichtung zum Lösen einer Verriegelungseinrichtung und Freigeben eines Schwenkhebels zum Beladen einer unteren Halteeinrichtung mit ein oder mehreren Bügeln aufweist.

Die Erfindung wird nachfolgend anhand eines Ausführungsbeispieles mit Bezug auf die beigefügten Zeichnungen näher erläutert. Es zeigen:

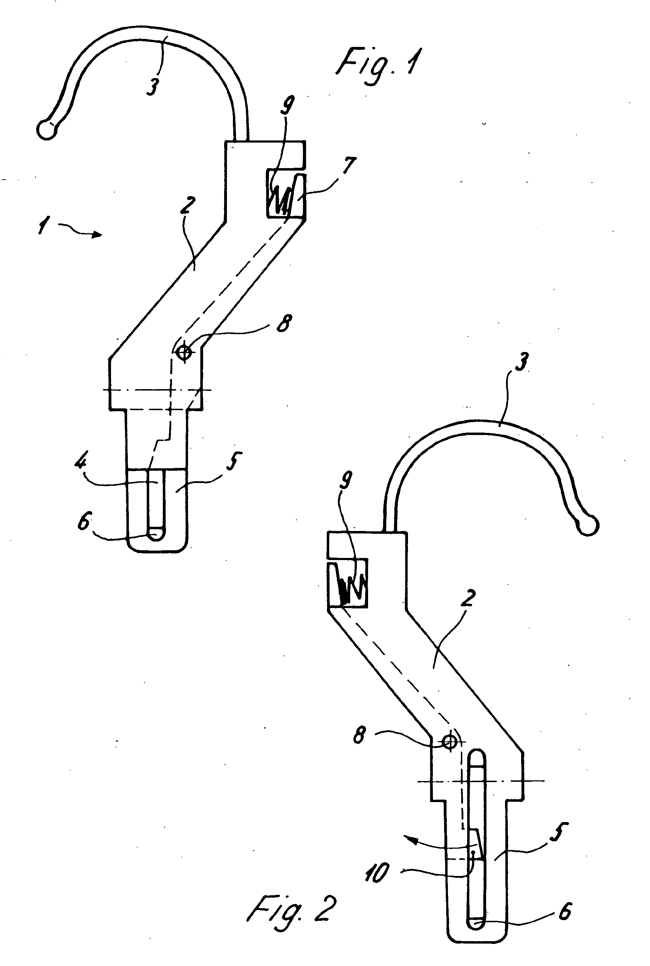

- Figur 1: eine Seitenansicht eines Ausführungsbeispieles eines erfindungsgemäß Adapterhakens;
- Figur 2: eine Seitenansicht des Adapterhakens der Figur 1 von der gegenüberliegenden Seite;
- Figur 3: eine geschnittene Detailansicht des Adapterhakens der Figur 1;
- Figur 4: eine Seitenansicht des Adapterhakens der Figur 1;
- Figur 5: eine Draufsicht des Adapterhakens der Figur 1, und
- Figur 6: eine perspektivische Ansicht eines Adapterhakens der Figur 1 in eine Beladestation.

Adapterhaken 1 umfasst einen Körper 2, beispielsweise aus Kunststoff, an dem ein oberer Haken 3 festgelegt ist. Der Haken 3 ist so gestaltet, dass er an standardisierten Förderschienen, insbesondere zum Transport von Bügeln für Bekleidungsstücke einsetzbar ist. Statt des Hakens könnte auch ein Bolzen oder ein anderes mechanisches Verbindungselement vorgesehen sein, dass mit einer entsprechenden Fördereinrichtung verbindbar ist.

Der Adapterhaken 1 weist eine untere Halteeinrichtung auf, an der ein Schwenkhebel 4 angeordnet ist. Der Schwenkhebel 4 ist durch einen Schlitz 6 in einer Rückwand 5 bewegbar. Der Schlitz 6 ist innerhalb des Körpers 2 angeordnet.

Ferner ist an dem Grundkörper 2 ein Hebel 7 zur Verriegelung des Schwenkhebels 4 gelagert. Der Hebel 7 ist um eine Drehachse 8 verschwenkbar und durch eine Feder 9 in eine verriegelte Stellung vorgespannt.

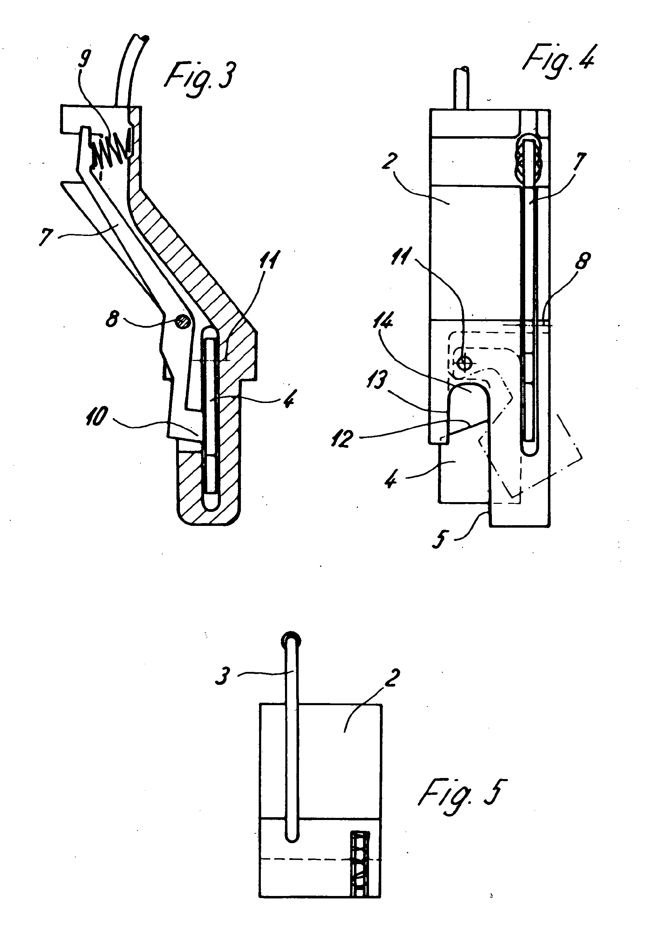

Wie in der geschnitten Ansicht der Figur 3 zu sehen ist, besitzt der Hebel 7 einen Vorsprung 10 in einem unteren Endabschnitt, der eine Anlagefläche gegenüber dem Schwenkhebel 4 ausbildet. In einem oberen Bereich ist der Hebel 7 durch die Feder 9 in die verriegelte Position vorgespannt, wobei ein oberer Betätigungsabschnitt des Hebels 7 durch eine Aussparung in dem Körper 2 von außen zugänglich ist.

In Figur 4 ist die Funktion des Schwenkhebels 4 gut erkennbar. Der Schwenkhebel 4 begrenzt in der geschlossenen Stellung einen nach unten offenen Aufnahmeraum 14, wobei der Schwenkhebel 4 C-förmig ausgebildet ist und an dem unteren Schenkel eine Auflagefläche 12 ausgebildet ist, die in Transportrichtung gesehen geneigt abfallend ausgebildet ist. In Figur 4 würde sich der Adapterhaken 1 in Transportrichtung von rechts nach links bewegen. Der Aufnahmeraum 14 ist quer zur Transportrichtung geöffnet und nach vorne hin durch eine Vorderwand 13 begrenzt, die eine größere Breite aufweist als der Schwenkhebel 4.

Beim Beladen wird der Adapterhaken in Transportrichtung bewegt und ein zu beladener Gegenstand, wie ein Kleiderbügel, wird im Bereich der unteren Halteeinrichtung bereitgehalten. Dieser drückt dann gegen eine Vorderkante des Schwenkhebels 4, wodurch dieser bei geöffneter Verriegelungseinrichtung nach hinten durch die Rückwand 5 verschwenken kann. Nach dem Verschwenken liegt der Kleiderbügel an der Rückwand 5 an und wird von dort in den Aufnahmeraum 14 eingefügt. Nachdem der Kleiderbügel in dem Aufnahmeraum 14 ist, kann der Schwenkhebel 4 aufgrund der Schwerkraft wieder in die geschlossene Position verschwenken und die Verriegelungseinrichtung 7 schließt und sichert somit die geschlossene Position des Schwenkhebels 4. Der beladene Bügel liegt dann auf der Auflagefläche 12 des Schwenkhebels 4 an und rutscht aufgrund der Schräge gegen die Vorderwand 13, die eine Ausrichtung des Bügels quer zur Transportrichtung vornimmt.

Zum Entladen des Kleiderbügels braucht lediglich die Verriegelungseinrichtung durch Verschwenken des Hebels 7 gelöst zu werden, so dass der Schwenkhebel 4 durch die Rückwand 5 verschwenken kann. Aufgrund der Schwerkraft des Bügels wird der Schwenkhebel 4 eine solche Schwenkbewegung ausführen.

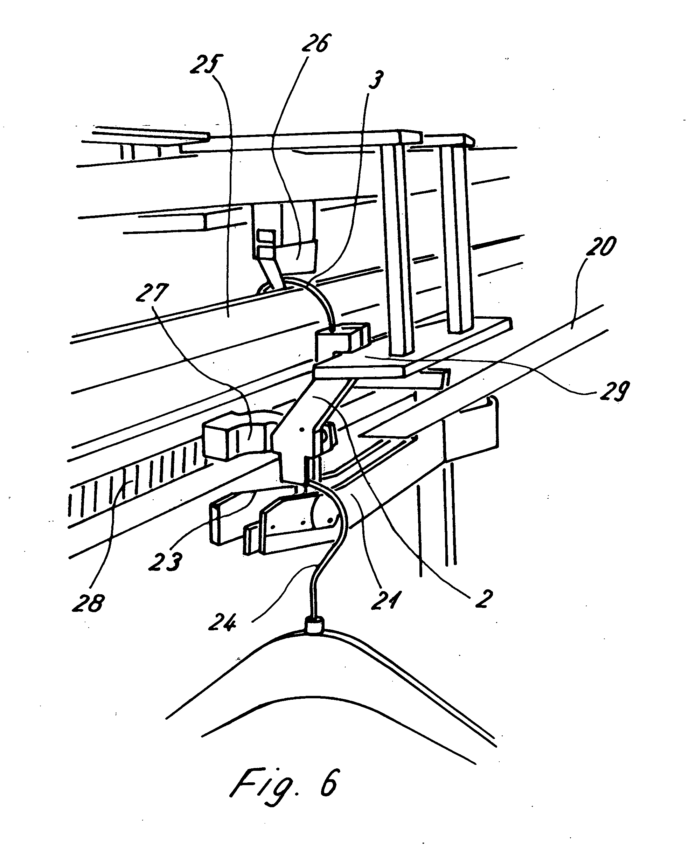

In Figur 6 ist eine Beladestation für den erfindungsgemäßen Adapterhaken 1 gezeigt. Die Beladestation umfasst eine Zuführschiene 20 für Kleiderbügel 24. Die Beladeschiene 20 ist in einem Winkel schräg nach oben zu einer Beladerampe 21 angeordnet, so dass aufgrund der Schwerkraft der Bügel 24 auf die Beladerampe 21 rutscht. Auf der Beladerampe 21 verweilt der Bügel 24, bis ein Adapterhaken 1 zugeführt wird. Der Adapterhaken 1 ist mit dem oberen Haken 3 an einer Förderschiene 25 geführt und wird dort über Transportmittel 26 in die Transportrichtung bewegt. Im unteren Bereich ist der Adapterhaken 1 durch einen Mitnehmer 27 geführt, der an einer Kette 28 angeordnet ist und mit derselben Transportgeschwindigkeit bewegt wird wie das Transportmittel 26. Dadurch wird ein Verschwenken des Adapterhakens 1 vermieden. Der Adapterhaken 1 wird soweit an Rampe 21 bewegt, bis der Bügel 24 an der Rückwand 5 anliegt und der Schwenkhebel 4 in der geöffneten nach hinten geschwenkten Position ist. Anschließend wird der Bügel 24 zusammen mit dem Adapterhaken 1 bewegt, wobei aufgrund einer schräg nach oben geneigten Rampe 23 bei einer Bewegung in Transportrichtung der Bügel 24 angehoben wird und somit von unten in den Aufnahmeraum 14 eingeführt wird. Sobald der Bügel 24 in dem Aufnahmeraum 14 ist und nicht mehr an dem Schwenkhebel 4 an der Vorderkante anliegt, verschwenkt der Schwenkhebel 4 in die geschlossene Stellung und kann dann verriegelt werden. Für eine Verriegelung ist an der Beladestation eine Platte 29 vorgesehen, die im Bereich der Aussparung an dem Körper 2 angeordnet ist, an dem das obere Ende des Hebels 7 zugänglich ist. Die Platte 29 weist eine Schräge auf, die gegen das obere Ende des Hebels 7 drückt und somit den Verriegelungsmechanismus freigibt, so dass der Anschlag 10 außer Eingriff mit dem Schwenkhebel 4 ist. Solange die Platte 29 gegen das obere Ende des Hebels 7 drückt, ist der Schwenkhebel 4 frei verschwenkbar. Nachdem der Bügel 24 in dem Aufnahmeraum 14 eingefügt ist, wird durch die Platte 29 bzw. deren Ende der Hebel 7 freigegeben und aufgrund der Kraft der Feder 9 gelangt diese in die verriegelte Stellung und der Schwenkhebel 4 ist nicht mehr verschwenkbar. Nach dem Ende der Rampe 21 liegt der Bügel 24 dann auf der Auflagekante 12 des Schwenkhebels 4 auf, der durch den Verriegelungsmechanismus sicher gehalten ist. Die Vorderwand 13 sorgt dann noch für eine Ausrichtung des Bügels 24.

In dem gezeigten Ausführungsbeispiel ist lediglich ein Bügel 24 dargestellt, der an der Beladestation aufgenommen wird. Es ist natürlich möglich, gleich mehrere Bügel an der Beladestation an dem Adapterhaken 1 einzufügen. Der Aufnahmeraum 14 ist dabei so bemessen, dass ein oder mehrere Bügel 24 gleichzeitig aufgenommen werden können und auch unterschiedliche Typen von Bügeln 24, beispielsweise auch Kunststoffbügel, die eine größere Erstreckung in der Höhe besitzen, können aufgenommen werden. Der Aufnahmeraum 14 kann je nach Bedarf ein oder mehrere Zentimeter in der Länge und in der Höhe besitzen.

Statt des Hebels 7 für die Verriegelung der Bewegung des Schwenkhebels 4 können auch andere Verriegelungsmechanismen, beispielsweise mittels Schieber oder anderer mechanischer Einrichtungen vorgesehen sein. Die Vorspannung des Hebels 7 in die verriegelte Position kann statt mit der Feder 9 auch über andere Spanneinrichtungen oder die Schwerkraft selbst erfolgen.

Ferner kann in bekannter Weise an dem Adapterhaken 1 eine Codierung, ein Chip oder andere Mittel vorgesehen sein, um bei der Identifizierung der beladenen Gegenstände zu ermöglichen.

Auch der Schwenkhebel 4 kann statt der gezeigten C-förmigen Kontur eine andere Geometrie besitzen, ohne dass man den Bereich der Erfindung verlässt.

## Patentansprüche

1. Adapterhaken für Fördersysteme, insbesondere für Bekleidungsstücke, mit einer oberen Aufhängung (3), die an einer Schiene (25) oder einer Fördereinrichtung für den Transport von Gegenständen einhängbar ist und einer unteren Halteeinrichtung, mittels der ein oder mehrere Bügel (24) aufnehmbar sind, **dadurch gekennzeichnet, dass** die untere Halteeinrichtung zur Aufnahme ein oder mehrerer Bügel (24) einen Schwenkhebel (4) umfasst, der über eine Verriegelungseinrichtung (7) fixierbar ist.

2. Adapterhaken nach Anspruch 1, **dadurch gekennzeichnet, dass** mittels des Schwenkhebels (4) eine nach unten offene Aufnahme (14) verschließbar ist, in die ein oder mehrere Bügel (24) einfügbar sind.

3. Adapterhaken nach Anspruch 1 oder 2, **dadurch gekennzeichnet, dass** eine Drehachse (11) des Schwenkhebels (4) im wesentlichen senkrecht zu einer Transportrichtung des Adapterhakens ( 1 ) angeordnet ist.

4. Adapterhaken nach einem der Ansprüche 1 bis 3, **dadurch gekennzeichnet, dass** der Schwenkhebel (4) einen unteren Schenkel zur Abstützung ein oder mehrerer Bügel (24) aufweist.

5. Adapterhaken nach Anspruch 4, **dadurch gekennzeichnet, dass** benachbart zu dem unteren Schenkel des Schwenkhebels (4) eine in Transportrichtung vordere Anlagefläche (5) ausgebildet ist, mittels der ein Bügel (24) im wesentlichen senkrecht zur Transportrichtung ausrichtbar ist.

6. Adapterhaken nach einem der Ansprüche 1 bis 5, **dadurch gekennzeichnet, dass** der Schwenkhebel (4) im wesentlichen C-förmig ausgebildet ist und eine Drehachse (11) am oberen Schenkel angeordnet ist.

7. Adapterhaken nach einem der Ansprüche 1 bis 6, **dadurch gekennzeichnet, dass** der untere Schenkel des Schwenkhebels (4) eine Auflagefläche (12) für einen Bügel (24) ausbildet und in Transportrichtung gesehen geneigt abfallend ausgebildet ist.

8. Adapterhaken nach einem der Ansprüche 1 bis 7, **dadurch gekennzeichnet, dass** die Aufnahme (14) eine Rückwand (5) aufweist und der Schwenkhebel (4) durch einen Schlitz (6) in der Rückwand (5) durchführbar ist.

9. Adapterhaken nach einem der Ansprüche 1 bis 8, **dadurch gekennzeichnet, dass** der Schwenkhebel (4) zwischen einer Vorderwand (13) und einer Rückwand (5) angeordnet ist und die Rückwand (5) nach unten über die Vorderwand (13) hervorsteht.

10. Adapterhaken nach einem der Ansprüche 1 bis 9, **dadurch gekennzeichnet, dass** der Verriegelungsmechanismus durch einen Hebel (7) gebildet ist, der in einer ersten Position einen Anschlag für den Schwenkhebel (4) ausbildet und in einer zweiten Position eine Bewegung des Schwenkhebels (4) freigibt.

11. Adapterhaken nach Anspruch 10, **dadurch gekennzeichnet, dass** der Hebel (7) um eine parallel zur Transportrichtung verlaufende Drehachse (8) schwenkbar ist.

12. Beladestation für einen Adapterhaken nach einem der vorhergehenden Ansprüche mit einer Förderschiene (25) für den Adapterhaken (1) und einer darunter angeordneten Beladeschiene (20, 21) zum Zuführen von Bügeln (24), **dadurch gekennzeichnet, dass** eine Betätigungseinrichtung (29) zum Lösen einer Verriegelungseinrichtung (7) und Freigeben eines Schwenkhebels (4) zum Beladen einer unteren Halteeinrichtung mit ein oder mehreren Bügeln (24) vorgesehen ist.
